# EUROPÄISCHE PATENTANMELDUNG

(11) **EP 2 876 467 A1**
(43) Veröffentlichungstag der Anmeldung: **27.05.2015**
(21) Anmeldenummer: 13194307.8
(22) Anmeldetag: 25.11.2013
(51) Int. Cl.: G01V 8/20

(54) **Lichtgitter**

(71) Anmelder: SICK AG, 79183 Waldkirch (DE)
(72) Erfinder: Eble, Johannes, 79183 Waldkirch (DE)
(74) Vertreter: Ludewigt, Christoph

(57) **Zusammenfassung**

Die Erfindung betrifft ein Lichtgitter mit divergenten Lichtstrahlen, so dass neben parallelen Strahlenbündeln auch Kreuzstrahlenbündel ausgewertet werden können, wobei nicht nur eine Lichtstrahlunterbrechung, sondern auch die Intensität des Lichteinfalls auf eine Lichtempfangseinheit ausgewertet wird. Um ein verbessertes Lichtgitter bereitzustellen, mit dem insbesondere kleinere Objekte detektierbar und möglicherweise auch lokalisierbar sind, wird vorgeschlagen, dass die Lichtsendeeinheiten eine Sendeoptik aufweisen, in deren Fokus eine ausgedehnte Lichtquelle angeordnet ist. Weiter enthält jedes Strahlenbündel ein effektives Strahlenbündel, wobei ein effektives Strahlenbündel dadurch definiert ist, dass eine Teilabschattung dieses effektiven Strahlenbündels eine der Abschattung entsprechende und messbare Intensitätsveränderung in dem zugeordneten Lichtempfänger bewirkt. Schließlich definieren die effektiven Strahlenbündel wenigstens einen Detektionsbereich in der Überwachungsebene, wobei im gesamten Detektionsbereich eine Ausleuchtung durch wenigstens ein effektives Strahlenbündel besteht.

## Beschreibung

Die Erfindung betrifft ein Lichtgitter mit mehreren, in einer Reihe angeordneten Lichtsendeeinheiten und diesen gegenüberliegend in Reihe angeordneten Lichtempfangseinheiten, die entsprechend dem Lichteinfall Empfangssignale liefern, zwischen denen eine durch Strahlenbündel zwischen den Lichtsendeeinheiten und den Lichtempfangseinheiten definierte Überwachungsebene liegt, wobei ein Strahlenbündel dadurch definiert ist, dass es diejenigen Lichtstrahlen umfasst, die von einer aktivierten Lichtsendeeinheit ausgehen und von einer gleichzeitig aktivierten Lichtempfangseinheit erfasst werden, wobei das Licht jeder Lichtsendeeinheit divergent ist und neben der gegenüberliegenden Lichtempfangseinheit auch wenigstens die nächste Nachbarempfangseinheit überstrahlt zur Bildung von Kreuzstrahlenbündel und mit einer Steuer- und Auswerteeinheit zur Ansteuerung der Lichtsende- und Lichtempfangseinheiten und zur Auswertung der Intensität des Lichteinfalls auf eine Lichtempfangseinheit.

Aus der EP 2 492 714 A1 ist ein derartiges Lichtgitter bekannt.

Ausgehend von diesem Stand der Technik ist es Aufgabe der Erfindung, ein verbessertes Lichtgitter bereitzustellen, mit dem insbesondere kleinere Objekte detektierbar und möglicherweise auch lokalisierbar sind.

Diese Aufgabe wird gelöst durch ein Lichtgitter mit den Merkmalen des Anspruchs 1.

Das Lichtgitter umfasst mehrere, in einer Reihe angeordnete Lichtsendeeinheiten und diesen gegenüberliegend in Reihe angeordnete Lichtempfangseinheiten, die entsprechend dem Lichteinfall Empfangssignale liefern. Zwischen den Lichtsendeeinheiten und den Lichtempfangseinheiten ist damit eine Überwachungsebene definiert, und zwar durch Strahlenbündel, wobei ein Strahlenbündel dadurch definiert ist, dass es diejenigen Lichtstrahlen umfasst, die von einer aktivierten Lichtsendeeinheit ausgehen und von einer gleichzeitig aktivierten Lichtempfangseinheit erfasst werden. Das Licht jeder Lichtsendeeinheit ist divergent, so dass jede Lichtsendeeinheit neben der direkt gegenüberliegenden Lichtempfangseinheit auch wenigstens die nächste Nachbarempfangseinheit, zur Bildung von Kreuzstrahlenbündel erster Ordnung, überstrahlt. Des Weiteren weist das Lichtgitter eine Steuer- und Auswerteeinheit zur Ansteuerung der Lichtsende-und Lichtempfangseinheiten und zur Auswertung der Intensität des Lichteinfalls auf eine Lichtempfangseinheit auf. Erfindungsgemäß weisen die Lichtsendeeinheiten eine Sendeoptik auf, in deren Fokus eine ausgedehnte Lichtquelle angeordnet ist. Weiter enthält jedes Strahlenbündel ein effektives Strahlenbündel, wobei ein effektives Strahlenbündel dadurch definiert ist, dass eine Teilabschattung dieses effektiven Strahlenbündels eine der Abschattung entsprechende und messbare Intensitätsveränderung in dem zugeordneten Lichtempfänger bewirkt. Schließlich definieren die effektiven Strahlenbündel wenigstens einen Detektionsbereich in der Überwachungsebene, wobei im gesamten Detektionsbereich eine Ausleuchtung durch wenigstens ein effektives Strahlenbündel besteht.

Der wesentliche Vorteil der Erfindung ist, dass das Lichtgitter eine wesentlich höhere Auflösung besitzt. Bisher war die Auflösung durch zumindest den Abstand zweier paralleler Lichtstrahlen begrenzt. Mit dem erfindungsgemäßen Lichtgitter können in dem definierten Detektionsbereich erheblich kleinere Objekte detektiert werden als das bisher möglich war. Denn in diesem Detektionsbereich besteht eine vollständige Ausleuchtung, und zwar durch die effektiven Strahlenbündel. Das bedeutet, dass der Detektionsbereich lückenlos ist und Objekte bereits dann erkannt werden, wenn sie eine Mindestgröße besitzen, die der Teilabschattung eines effektiven Strahlenbündels entspricht, die von einem Lichtempfänger gerade noch detektiert werden kann. Das ist erheblich kleiner als bei bekannten Lichtgittern, bei denen sich die Mindestgröße in erster Linie aus dem Abstand zweier paralleler Lichtstrahlen ergibt. Details und Zahlenbeispiele dazu folgen in der detaillierten Figurenbeschreibung.

Um eine definierte Lichtquelle zu erhalten, hat es sich als vorteilhaft erwiesen, wenn die Lichtquelle als von einer mit einem Lichtsendeelement, beispielsweise einer LED, beleuchteten Blende gebildet ist, wie dies grundsätzlich von heutigen Lichtgittern schon bekannt ist. Alternativ wäre auch einfach eine kommerziell erhältliche LED als Lichtquelle realisierbar, bei der dann die Sendeoptik in dem LED-Bauteil integriert ist.

In einer einfachen Ausführung und um einen definierten Abstrahlwinkel zu generieren und eine höhere Reichweite zu erreichen, ist es in Weiterbildung der Erfindung vorgesehen, dass die Sendeoptik eine Sendelinse aufweist.

Weiter vorteilhaft ist es, wenn die Sendeoptik derart ausgebildet ist, das der Querschnitt des Sendelichts einer Lichtsendeeinheit in etwa rechteckförmig ist. Dann ergibt sich ein vorteilhafter in etwa linearer Zusammenhang zwischen der Teilabschattung eines effektiven Strahlenbündels und dem Empfangssignal des entsprechenden Lichtempfängers.

Damit alles Licht, das die Empfangsapertur trifft, auch in den Lichtempfänger gelangt und nachgewiesen werden kann, ist weiter vorgesehen, dass die Lichtempfangseinheit eine Empfangsoptik mit einer Empfangslinse aufweist.

Neben der Erhöhung der Auflösung kann auch eine Positionsbestimmung eines Objektes in der Überwachungsebene durch das erfindungsgemäße Lichtgitter möglich sein. Um das zu ermöglichen überstrahlt das Licht einer Lichtsendeeinheit neben der gegenüberliegenden Lichtempfangseinheit und der nächst benachbarten Lichtempfangseinheit auch noch die übernächste Nachbarempfangseinheit. Damit sind Kreuzstrahlenbündel zweiter Ordnung gebildet.

Wenn die Detektionsbereiche durch die Kreuzungsbereiche der Strahlenbündel verschiedener Ordnungen gebildet sind, also beispielsweise durch den Kreuzungsbereich eines parallelen effektiven Strahlenbündels mit einem effektiven Kreuzstrahlenbündel erster Ordnung und/oder eines effektiven Kreuzstrahls erster Ordnung mit einem der zweiten Ordnung, dann sind in diesen Detektionsbereichen Positionsbestimmungen von Objekten möglich.

Diese Positionsbestimmung kann zum Beispiel bei der Höhenerkennung von Objekten in der Überwachungsebene vorteilhaft eingesetzt werden, z. B. um die Höhe quaderförmiger Pakete beim Vorbeitransport an senkrecht stehenden, erfindungsgemäßen Lichtgittern zu bestimmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung eines erfindungsgemäßen Lichtgitters;
- Fig. 2: eine schematische Darstellung eines erfindungsgemäßen Lichtgitters;
- Fig. 3 und 4: schematische Darstellungen idealisierter Lichtgitter nach dem Stand der Technik mit parallelem Sendelicht;
- Fig. 5: eine schematische Darstellung eines weiteren idealisierten Lichtgitters mit divergentem Sendelicht;
- Fig. 6: eine schematische Darstellung von Komponenten des erfindungsgemäßen Lichtgitters zur Verdeutlichung des Strahlenganges;
- Fig. 7: eine schematische Darstellung wie Fig. 5 zur Verdeutlichung des Strahlenganges mit Kreuzstrahlen erster Ordnung;
- Fig. 8: eine schematische Darstellung wie Fig. 5 und 7 zur Verdeutlichung des Strahlenganges mit Kreuzstrahlen erster und zweiter Ordnung.

Ein erfindungsgemäßes Lichtgitter 10 weist ein Sendergehäuse 12 und ein Empfängergehäuse 14 auf, die einerseits eine in Längsrichtung (im Folgenden auch y-Richtung) angeordnete Reihe von Lichtsendern 18 aufweisen bzw. eine in Längsrichtung angeordnete Reihe von Empfängern 20. Jedem Lichtsender 18 ist gegenüberliegend ein Empfänger 20 zugeordnet, so dass zwischen Sender-Empfänger-Paaren jeweils Lichtstrahlenbündel liegen, die vereinfacht in dieser Darstellung als Pfeile 22 symbolisiert sind. Jedem Lichtsender 18 ist eine Sendeoptik 24 vorgeordnet, die das Sendelichtstrahlbündel 22 formt. Lichtsender 18 und Sendeoptik 24 bilden eine Lichtsendeeinheit 19. Jedem Lichtempfänger 20 ist eine Empfangsoptik 26 vorgeordnet, so dass das Licht, das auf die Empfangsoptik 26 trifft, auch auf den Lichtempfänger 20 gelangt. Lichtempfänger 20 und Empfangsoptik 26 bilden eine Lichtempfangseinheit 21.

Die Lichtstrahlenbündel 22 definieren in ihrer Gesamtheit eine Überwachungsebene, die daraufhin überwacht wird, ob eine oder mehrere der Lichtstrahlenbündel 22 von einem nicht dargestellten Objekt ganz oder teilweise unterbrochen werden. Eine solche Unterbrechung wird in einer Empfängerelektronik 30 ausgewertet und ein entsprechendes Signal an einem Ausgang 32 ausgegeben. Das Ausgangssignal kann ein einfaches Schaltsignal ("Objekt in Schutzfeld ja/nein") oder ein Signal mit mehr Information sein, z. B. wo sich das Objekt befindet. Senderseitig ist eine Ansteuerelektronik 28 zur Ansteuerung der Lichtsender 18 vorgesehen.

Die Sender 18 und die Lichtempfänger 20 haben in ihrer Reihe einen gleichmäßigen Abstand A zueinander, der auch als Rastermaß bezeichnet wird. Jedem Lichtsender liegt ein Lichtempfänger gegenüber. Die Zuordnung von einem aktivierten Lichtsender 18 zu einem aktivierten Lichtempfänger erfolgt durch die Steuereinheit 28 und die Steuer- und Auswerteeinheit 30, die miteinander synchronisiert sind.

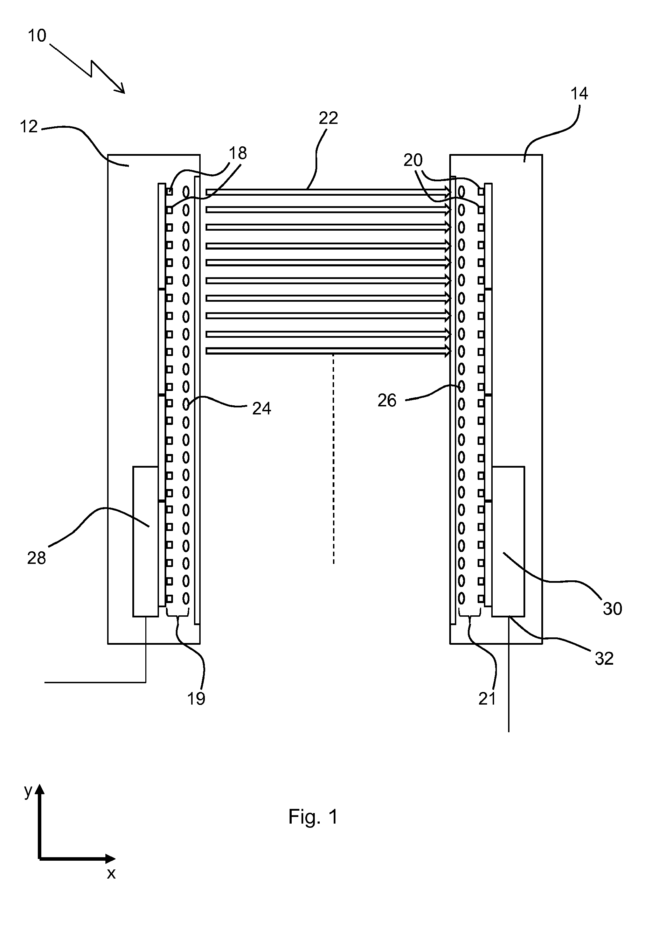

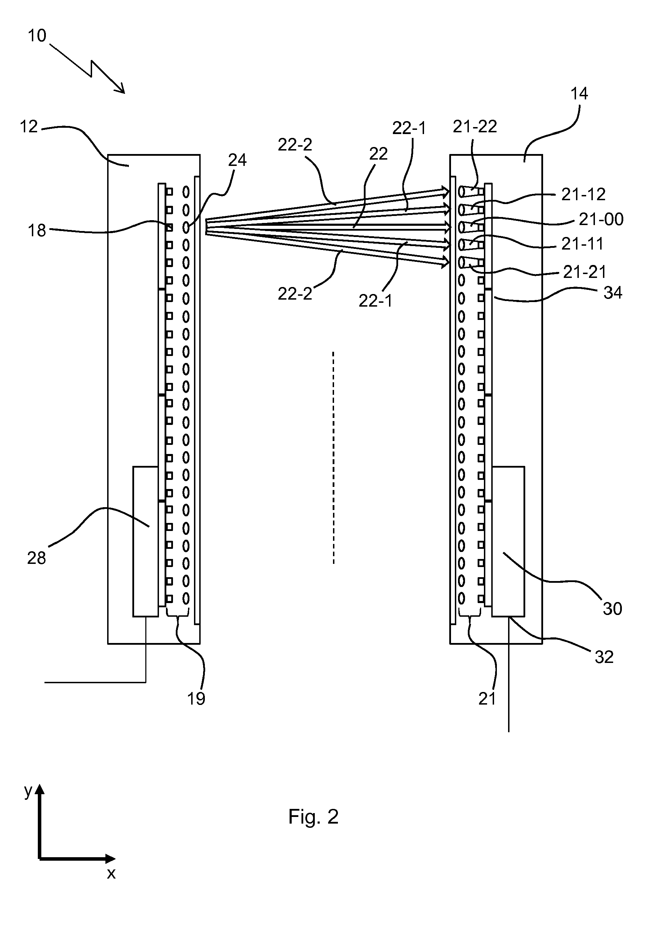

Sind genau gegenüberliegende Sender/Empfänger zeitgleich aktiviert, dann setzt sich die Überwachungsebene aus den in Fig. 1 schematisch dargestellten parallelen Strahlenbündeln 22 zusammen. Dabei sind in bekannter Weise nicht alle Sender 18 gleichzeitig aktiviert, sondern es werden die Sender 18 und zugehörigen Empfänger 20 einzeln in schneller Folge zyklisch durchgeschaltet (aktiviert), so dass immer nur ein Sender-Empfänger-Paar und damit ein Strahlenbündel aktiviert ist. Die Zyklus-frequenz (Taktfrequenz) ist sehr hoch, so dass Objekte, die sich durch die Überwachungsebene bewegen oder durch die Ebene gefördert werden, quasistationär sind. Darüberhinaus sieht das erfindungsgemäße Lichtgitter 10 weiter vor, dass auch sogenannte Kreuzstrahlenbündel aktiviert werden können. Diese ergeben sich, wenn einem aktivierten Lichtsender 18 nicht der genau gegenüberliegende Empfänger 20 aktiviert ist, sondern deren Nachbarempfänger. In Fig. 2 sind solche Kreuzstrahlen schematisch dargestellt und werden anhand dieser Figur erläutert.

Der Sender 18 (in Fig. 2 als Beispiel der dritte von oben) sendet Sendelicht aus, das durch die Sendeoptik 24 derart aufgeweitet ist, dass es nicht nur die gegenüberliegende Empfangeinheit 21-00 überstrahlt, sondern auch die jeweils nächsten Nachbareinheiten 21-11 und 21-12 und auch die übernächsten Nachbarn 21-21 und 21-22. Werden jetzt der Sender 18 und die Empfangseinheit 21-00 durch die Steuereinheiten 28 und 24 zeitgleich aktiviert, ergibt sich das "parallele" Strahlenbündel 22, wie in Fig. 1 dargestellt. Werden nun der Sender 18 und die Empfangseinheit 21-12 bzw. 21-12 zeitgleich aktiviert, ergeben sich Kreuzstrahlenbündel 22-1, die im Folgenden als Kreuzstrahlenbündel erster Ordnung bezeichnet werden, um deutlich zu machen, dass sie von einem Sender 18 ausgehend auf die nächste Nachbarempfangseinheit 21-11 bzw. 21-12 treffen. Analog werden Kreuzstrahlenbündel 22-2 zweiter Ordnung zwischen dem Sender 18 und den übernächsten Nachbarn 21-21 bzw. 21-22 gebildet. Zusammengefasst ergeben sich Strahlenbündel immer zwischen zeitgleich aktivierten Sendern und Empfängern. Sind diese genau gegenüberliegend sollen diese im Folgenden "parallele Strahenbündel" heißen, liegen diese nicht genau gegenüber sollen die sich dann bildenden Strahlenbündel als "Kreuzstrahlenbündel" bezeichnet werden.

Die Bildung solcher Kreuzstrahlen in einem Lichtgitter ist bekannt. Das Neue an dieser Erfindung ist die konkrete Ausbildung der Lichtstrahlenbündel, deren Erzeugung und Auswertung. Um das aber besser zu verstehen, sollen zunächst einige hypothetische, idealisierte Anordnungen betrachtet werden.

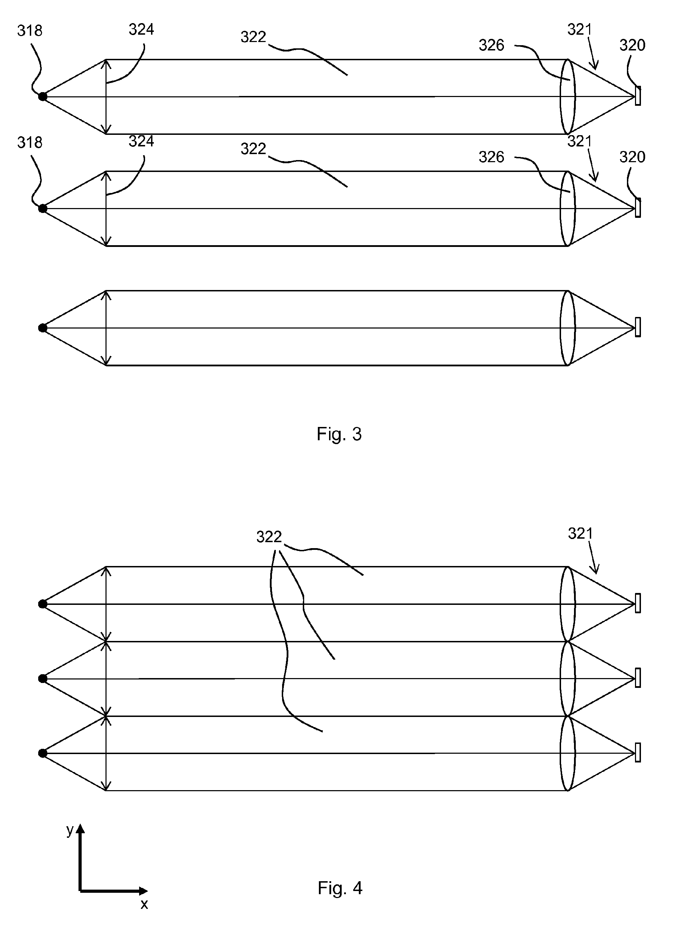

Fig. 3 zeigt eine ideale Anordnung für ein Lichtgitter. Dabei sind punktförmige Sendelichtquellen 318 vorgesehen, die ideale Lambertsche Strahler sind, und im Fokus einer Sammellinse 324. Das bedeutet, dass das Licht der Strahlenbündel 322 genau parallel ist und das gesamte Sendellicht auf eine gegenüberliegende Empfangseinheit 321, bestehend aus Empfangsoptik 326 und Empfänger 320, fällt und von der Empfangsoptik 326 auf den Empfänger 320 gebündelt wird. Die Auflösung eines solchen Lichtgitters würde sich aus dem Abstand zweier paralleler Strahlenbündel 322 plus der Größe einer Teilabschattung ergeben, die eine Empfangseinheit 321 gerade noch detektieren könnte.

Wenn man die Sender-Empfängeranordnungen so nah zusammenbringt, dass sich die parallelen Strahlenbündel 322 berühren, wie in Fig. 4 gezeigt, hätte man theoretisch ein Schutzfeld ohne Lücken geschaffen und könnte jedes Objekt detektieren, da ein Objekt an jeder Stelle in der Überwachungsebene eine Abschattung bewirkt, die theoretisch in einer der Empfangseinheiten 321 nachweisbar wäre. Die Auflösung wäre in diesem Fall nur durch die Größe der Abschattung begrenzt, die eine Empfangseinheit 321 noch nachweisen könnte.

Das ist zwar wünschenswert, aber in der Realität aus vielen Gründen nicht machbar. Die wichtigsten Gründe sind: 1) Es gibt keine idealen Lambertschen Punktstrahler. 2) Eine Justierung der optischen Komponenten zueinander und der Sender auf die Empfänger, also der Sendergehäuse auf die Empfängergehäuse, ist praktisch nicht machbar. 3) Eine derart enge Anordnung, bei der die parallelen Lichtstrahlenbündel lückenlos aneinanderschließen, ist viel zu kostenaufwändig. Insgesamt ist diese theoretische Anordnung nicht realisierbar.

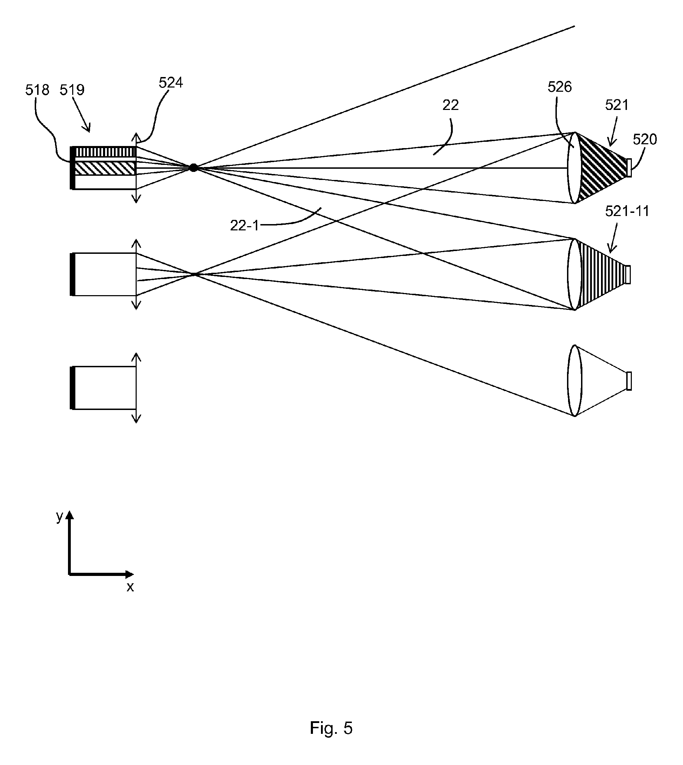

In der Realität hat man keine parallelen Sendestrahlenbündel mit absolut parallelem Licht. Man hat im Wesentlichen immer divergentes Sendelicht, das auch für die Justierung von Sender- und Empfängergehäuse zueinander benötigt wird. Solch divergentes Licht lässt sich in einer theoretischen Anordnung nach Fig. 5 erzeugen. Diese Anordnung enthält bereits einen Teil des erfindungsgemäßen Lichtgitters 10 wie nachfolgend noch klarer wird. In diesem theoretischen Beispiel umfasst eine Lichtsendeeinheit 519 eine Lichtquelle 518, die eine Ausdehnung in y-Richtung (Längsrichtung des Lichtgitters) aufweist und absolut paralleles Licht in der Überwachungsebene erzeugt. Dieses parallele Licht fällt auf eine Sammellinse 524 der Sendeeinheit 519, die das parallele Sendelicht im Fokus bündelt, so dass es schließlich divergent abstrahlt und dabei die gegenüberliegenden Empfangseinheiten 521 überstrahlt. In diesem Beispiel werden die jeweils nächsten Nachbarn 521-11 der genau gegenüberliegenden Empfangsoptik 521 gerade noch getroffen. Die Empfangsoptiken 526 der Empfangseinheiten 521 sind so ausgebildet, dass sie das Licht immer auf den nachgeordneten Empfänger 520 bündeln, so dass das Licht, das auf die Empfangsoptik 526 trifft, auch nachgewiesen wird.

In dieser idealen Anordnung fällt dann ein Teil des Sendelichts, nämlich nur der schräg schraffierte, auf die genau gegenüberliegende Empfangseinheit zur Bildung der oben definierten "parallelen" Lichtstrahlenbündel 22. Wohingegen ein anderer Teil, nämlich der senkrecht schraffierte, auf den nächsten Nachbarempfänger fällt. Dieses "senkrecht schraffierte Licht" entspricht den oben definierten Kreuzstrahlenbündel erster Ordnung, die das Bezugszeichen 22-1 hatten.

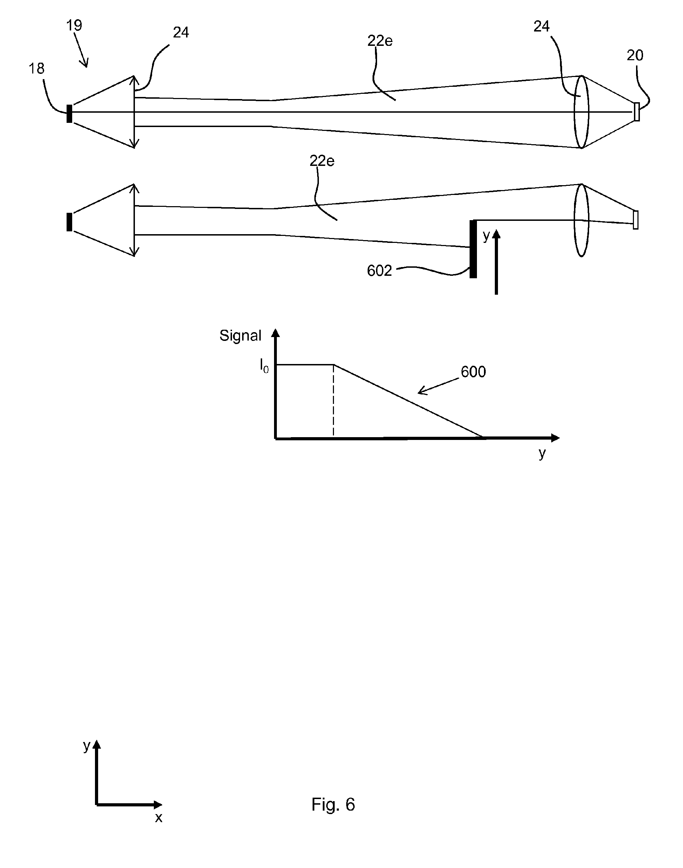

Nun soll die Realität und damit das erfindungsgemäße Lichtgitter 10 betrachtet werden. Dabei soll die Fig. 6 helfen. In dem erfindungsgemäßen Lichtgitter befindet sich im Fokus der Sendeoptik 24 der Sendeeinheit 19 die Lichtquelle 18, die in y-Richtung ausgedehnt ist und Sendelicht abstrahlt. Das Sendelicht hat Anteile von parallelem Licht und auch divergente Anteile, so dass auch die gesamte Sendeoptik 24 beleuchtet ist.

Der Teil des Sendelichts, der auf die genau gegenüberliegende Empfangseinheit 19 strahlt und von dieser erfasst wird, bildet das "parallele" Lichtstrahlenbündel 22. Die Erfindung geht nun im Weiteren aber nicht einfach von diesen theoretisch so definierten Strahlenbündeln aus, sondern definiert sogenannte "effektive" Strahlenbündel, das anhand der Fig. 6 erklärt werden soll. Ein effektives Strahlenbündel 22e definiert sich dadurch, dass eine der Teilabschattung des Strahlenbündels eine entsprechende und messbare Intensitätsveränderung in dem zugeordneten Lichtempfänger 20 bewirkt. Dies ist sehr einfach in Fig. 6 anhand des Diagramms 600 zu erkennen. Wird ein Objekt 602, das eine Abschattung bewirkt in y-Richtung in den Strahlengang eingeschoben, erfolgt eine der Eindringtiefe y entsprechende Absenkung des Empfangssignals, das bei freiem Strahlengang als 100% definiert wird. Das 100%-Signal muss für alle Strahlenbündel, parallelen Strahlenbündel und Kreuzstrahlenbündel, für jeden mechanischen Aufbau, also für jeden Sender-Empfängerabstand, in einem Einlernprozess eingelernt werden. Das Empfangssignal sinkt bis auf Null, wenn das Objekt 602 das effektive Strahlenbündel 22e vollständig abdeckt. Es sei bemerkt, dass sich ein annähernd linearer Verlauf, wie er in Fig. 6 dargestellt ist, nur dann ergibt, wenn das effektive Strahlenbündel 22e im Wesentlichen einen rechteckigen Querschnitt hat. Bei Verwendung von kreisförmigen Empfangs- und Sendeoptiken hat das effektive Strahlenbündel 22e einen runden Querschnitt und die Abhängigkeit wäre nicht mehr linear, aber immer noch eindeutig.

Diese Betrachtungen hängen auch von der Empfindlichkeit des verwendeten Empfängers 20 ab. Es kann aber von typischen, realistischen Werten ausgegangen werden, was bedeutet, dass ein Empfänger einen Signalabfall von 10% registrieren kann.

Macht man eine solche Abtastung des effektiven parallelen Strahlenbündels 22e an verschiedenen x-Werten, also in unterschiedlichen Abständen zur Sendeeinheit 19, erhält man schließlich das gesamte effektive parallele Strahlenbündel 22e. In dem theoretischen, idealen Fall der Fig. 3 hat das effektive parallele Strahlenbündel über den gesamten Weg einen unveränderten Querschnitt. In dem Fall der Fig. 4, mit idealem divergenten Sendelicht hat der Querschnitt im Fokus der Sendelinse 524 eine Einschnürung. Im erfindungsgemäßen Fall, mit ausgedehnter Lichtquelle 18 im Fokus der Sendelinse 24 hat das effektive parallele Strahlenbündel 22e einen Querschnitt, wie er qualitativ in Fig. 6 dargestellt ist. Da es bei der ausgedehnten Lichtquelle 18 Anteile von parallelem Licht und divergentem Licht gibt, ist das entstehende effektive parallele Lichtstrahlenbündel 22e eine Mischung der verschiedenen Anteile und kann nur durch Messung bestimmt werden. Fig. 6 zeigt den groben qualitativen Verlauf.

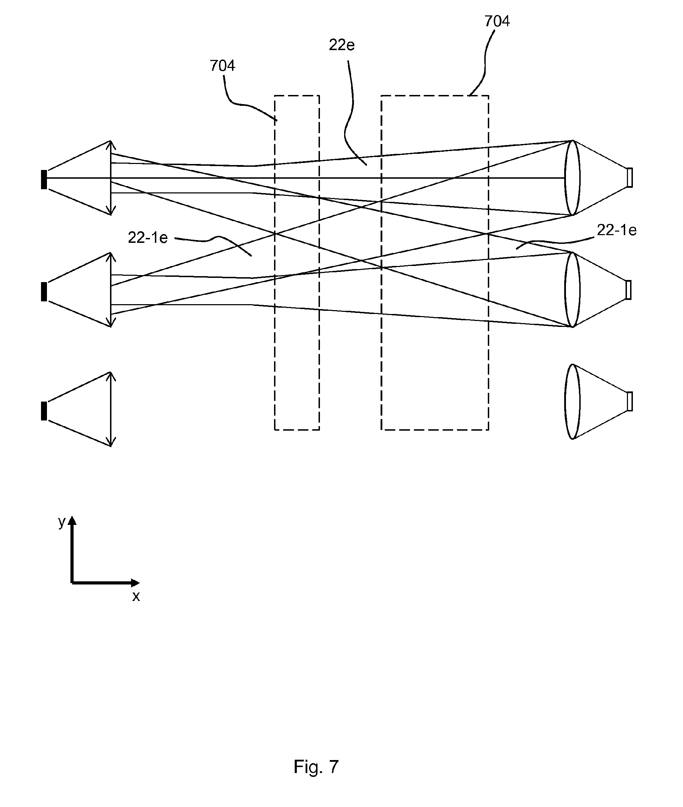

Auf diese Art und Weise werden nun auch "effektive" Kreuzstrahlenbündel 22-1e definiert, die qualitativ so aussehen, wie in Fig. 7 dargestellt.

Werden jetzt die effektiven parallelen Strahlenbündel 22e und auch die effektiven Kreuzstrahlenbündel 22-1 e ausgewertet, ergeben sich die wesentlichen Vorteile der Erfindung.

Dies soll zunächst qualitativ anhand der Fig. 7 erläutert werden. Zunächst sind die effektiven Strahlenbündel so definiert, dass eine Teilabschattung als Signaländerung im Empfänger detektierbar ist. Also kann in den Bereichen, die von effektiven Strahlenbündeln 22e und 22-1e erfasst (abgedeckt) werden, eine hohe Auflösung erreicht werden, die der minimalen Größe entspricht, die eine detektierbare Signaländerung (typischerweise 10% Signalabfall) bewirkt. Das sind die mit gestrichelten Linien in Fig. 7 markierten Bereiche. Dort herrscht eine vollständige Ausleuchtung durch effektive Strahlenbündel, nämlich effektive parallele Strahlenbündel 22e oder effektive Kreuzstrahlenbündel erster Ordnung 22-1e. Diese Bereiche sind somit Detektionsbereiche 704 im Sinne der Erfindung.

Bei Verwendung typischer Abmessungen für den Rasterabstand und Größen der Optiken kann die Auflösung um einen Faktor 20 verbessert werden. Diese höhere Auflösung gilt aber nur in den Detektionsbereichen 704. Sollen nur diese genutzt werden muss sichergestellt sein, dass zu detektierenden Objekte auch nur in den entsprechenden Bereichen in x-Richtung vorliegen.

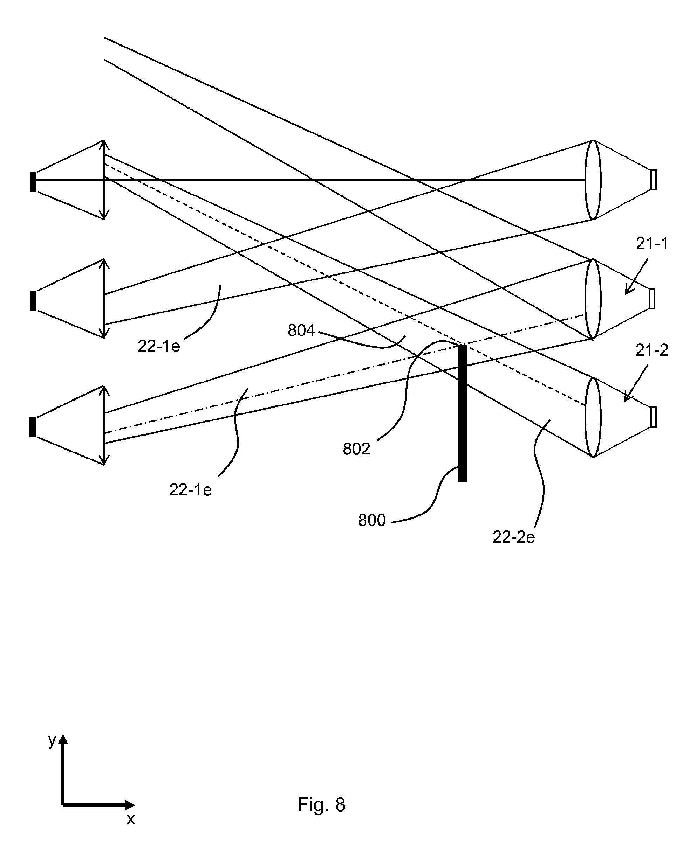

In einer weiteren Ausführungsform der Erfindung werden neben den effektiven Kreuzstrahlenbündel erster Ordnung 22-1 e zusätzlich die effektiven Kreuzstrahlenbündel zweiter Ordnung 22-2 genutzt, die sich analog zu den anderen effektiven Strahlenbündeln definieren. Solche effektiven Kreuzstrahlen erster 22-1e und zweiter 22-2e Ordnung sind in Fig. 8 qualitativ dargestellt. Diese effektiven Kreuzstrahlen 22-1e und 22-2e können nun dazu genutzt werden, eine genaue Positionsangabe zum Beispiel einer Objektkante 802 eines Objekts 800 zu bestimmen.

Eine solche Positionsbestimmung ist prinzipiell nicht nur in dem Kreuzungsbereich 804 der effektiven Kreuzstrahlen erster und zweiter Ordnung möglich, sondern immer dort, wo sich zwei effektive Strahlenbündel unterschiedlicher Ordnung, z. B. parallele mit erster oder zweiter Ordnung oder erster mit zweiter Ordnung, überlappen. Die gestrichelte und die strichpunktierte Linien deuten an, welcher Anteil des Lichts der Kreuzstrahlen auf die Empfangseinheiten 21-1 und 21-2 fällt. Ein bestimmte Kombination von Intensitäten an den Empfangseinheiten entspricht einer x-y Position in dem Kreuzungsbreich 804. Diese Kombinationen müssen in einer Look-up Tabelle zuvor in einer Einlernphase abgespeichert worden sein. Die Bestimmung der Werte der Look-up Tabelle kann entweder experimentell oder auch mittels Simulation erfolgen. Damit kann also die obere Objektkante 802 und damit die Höhe des Objektes 800 bestimmt werden. Des Weiteren kann die Lage des Objekts zwischen Sendergehäuse und Empfängergehäuse bestimmt werden. Ebenso könnte die Dicke eines Objekts bestimmt werden, indem sowohl die Lage der Oberkante als auch die Lage einer Unterkante mit diesem Verfahren bestimmt wird. Dazu muss sich das Objekt selbstverständlich vollständig in dem Lichtgitter befinden. Ein denkbarer Einsatz zum Vermessen einer Objektgröße/dicke auf diese Weise könnte eine Anwendung sein, bei denen das zu messende Objekt durch eine horizontal orientierte Überwachungsebene des erfindungsgemäßen Lichtgitters fällt.

Im tatsächlichen Einsatz des erfindungsgemäßen Lichtgitters setzt sich der Detektionsbereich, in dem die beschriebene Positionsbestimmung möglich ist, aus den oben einzeln beschriebenen Kreuzungsbereichen zusammen, also im Wesentlichen aus den in Fig. 7 und 8 dargestellten Kreuzungsbreichen. Diese Kreuzungsbereiche sind nicht in einer gemeinsamen Figur dargestellt, da eine solche völlig unübersichtlich wäre.

In weiteren nicht dargestellten Ausführungsformen der Erfindung sind weitere Alternativen denkbar.

Prinzipiell wäre es denkbar, eine Anordnung vorzusehen, bei der den Sendern gegenüber ein Reflektor angeordnet ist, der die Strahlenbündel auf neben den Sendern angeordnete Empfängern, die im gleichen Gehäuse angeordnet sind, reflektiert. Das zu detektierende oder zu messende Objekt befindet sich dann zwischen Sender und Empfänger und dem Reflektorstreifen.

Die Auflösungserhöhung wurde am Beispiel weniger Sende- und Empfangskanäle gezeigt. Eine Erweiterung auf ganze Sender- und Empfängerarrays ist denkbar.

Damit wäre auch eine Ausdehnung auf drei Dimensionen denkbar, wenn also nicht nur eine Reihe von Sendern und einer Reihe von Empfängern vorgesehen ist, sondern eine Vielzahl parallel angeordneter Sender und Empfänger.

Auch wäre es denkbar, Kreuzstrahlen höherer Ordnung zu berücksichtigen, wodurch z. B. der Detektionsbereich vergrößert wäre.

## Patentansprüche

1. Lichtgitter (10),
mit mehreren, in einer Reihe angeordneten Lichtsendeeinheiten (19) und diesen gegenüberliegend in Reihe angeordneten Lichtempfangseinheiten (21), die entsprechend dem Lichteinfall Empfangssignale liefern,
zwischen denen eine durch Strahlenbündel (22) zwischen den Lichtsendeeinheiten (19) und den Lichtempfangseinheiten (21) definierte Überwachungsebene liegt, wobei ein Strahlenbündel (22) dadurch definiert ist, dass es diejenigen Lichtstrahlen umfasst, die von einer aktivierten Lichtsendeeinheit (19) ausgehen und von einer gleichzeitig aktivierten Lichtempfangseinheit (21) erfasst werden,
wobei das Licht jeder Lichtsendeeinheit (19) divergent ist und neben der gegenüberliegenden Lichtempfangseinheit (21) auch wenigstens die nächste Nachbarempfangseinheit (21-1) überstrahlt zur Bildung von Kreuzstrahlenbündel (22-1),
mit einer Steuer- und Auswerteeinheit (28, 30) zur Ansteuerung der Lichtsende- (18) und Lichtempfangseinheiten (21) und zur Auswertung der Intensität des Lichteinfalls auf eine Lichtempfangseinheit (21),
**dadurch gekennzeichnet,**
**dass** die Lichtsendeeinheiten (19) eine Sendeoptik (24) aufweisen, in deren Fokus eine ausgedehnte Lichtquelle (18) angeordnet ist,
**dass** ein Strahlenbündel ein effektives Strahlenbündel (22e, 22-1e, 22-2e) enthält, wobei ein effektives Strahlenbündel (22e, 22-1e, 22-2e) dadurch definiert ist, dass eine Teilabschattung dieses effektiven Strahlenbündels (22e, 22-1e, 22-2e) eine der Abschattung entsprechende und messbare Intensitätsveränderung in dem zugeordneten Lichtempfänger (20) bewirkt,
und **dass** die effektiven Strahlenbündel wenigstens einen Detektionsbereich (704, 804) in der Überwachungsebene definieren, wobei im gesamten Detektionsbereich (704) eine Ausleuchtung durch wenigstens ein effektives Strahlenbündel (22e, 22-1e, 22-2e) besteht.

2. Lichtgitter nach Anspruch 1, **dadurch gekennzeichnet, dass** die Lichtquelle von einer mit einem Lichtsendeelement (LED) beleuchteten Blende gebildet ist.

3. Lichtgitter nach einem der vorhergehenden Ansprüche, **dadurch gekennzeichnet, dass** die Sendeoptik eine Sendelinse aufweist.

4. Lichtgitter nach einem der vorhergehenden Ansprüche, **dadurch gekennzeichnet, dass** die Sendeoptik derart ausgebildet ist, dass der Querschnitt des Sendelichts einer Lichtsendeeinheit in etwa rechteckförmig ist.

5. Lichtgitter nach einem der vorhergehenden Ansprüche, **dadurch gekennzeichnet, dass** die Lichtempfangseinheit eine Empfangsoptik mit einer Empfangslinse aufweist.

6. Lichtgitter nach einem der vorhergehenden Ansprüche, **dadurch gekennzeichnet, dass** das Licht einer Lichtsendeeinheit neben der gegenüberliegenden Lichtempfangseinheit und der nächst benachbarten Lichtempfangseinheit auch die übernächste Nachbarempfangseinheit erfasst zur Bildung von Kreuzstrahlenbündel zweiter Ordnung.

7. Lichtgitter nach einem der vorhergehenden Ansprüche, **dadurch gekennzeichnet, dass** Kreuzungsbereiche der Strahlenbündel verschiedener Ordnungen den Detektionsbereich bilden.

8. Verwendung eines Lichtgitters nach einem der vorhergehenden Ansprüche zur Ermittlung der Höhe und/oder Position von durch die Überwachungsebene geförderten Objekten.

## Geänderte Patentansprüche

### Geänderte Patentansprüche gemäss Regel 137(2) EPÜ.

1. Lichtgitter (10),
mit mehreren, in einer Reihe angeordneten Lichtsendeeinheiten (19) und diesen gegenüberliegend in Reihe angeordneten Lichtempfangseinheiten (21), die entsprechend dem Lichteinfall Empfangssignale liefern,
zwischen denen eine durch Strahlenbündel (22) zwischen den Lichtsendeeinheiten (19) und den Lichtempfangseinheiten (21) definierte Überwachungsebene liegt, wobei ein Strahlenbündel (22) dadurch definiert ist, dass es diejenigen Lichtstrahlen umfasst, die von einer aktivierten Lichtsendeeinheit (19) ausgehen und von einer gleichzeitig aktivierten Lichtempfangseinheit (21) erfasst werden,
wobei das Licht jeder Lichtsendeeinheit (19) divergent ist und neben der gegenüberliegenden Lichtempfangseinheit (21) auch wenigstens die nächste Nachbarempfangseinheit (21-1) überstrahlt zur Bildung von Kreuzstrahlenbündel (22-1),
mit einer Steuer- und Auswerteeinheit (28, 30) zur Ansteuerung der Lichtsende- (18) und Lichtempfangseinheiten (21) und zur Auswertung der Intensität des Lichteinfalls auf eine Lichtempfangseinheit (21),
**dadurch gekennzeichnet,**
**dass** die Strahlenbündel bzw. Kreuzstrahlenbündel effektive Strahlenbündel (22e) bzw. effektive Kreuzstrahlenbündel (22-1e und 22-2e) sind, wobei ein effektives Strahlenbündel (22e, 22-1e, 22-2e) dadurch definiert ist, dass an jedem Abstand zur Lichtsendeeinheit eine Teilabschattung dieses effektiven Strahlenbündels (22e, 22-1e, 22-2e) eine der Abschattung entsprechende und messbare Intensitätsveränderung in dem zugeordneten Lichtempfänger (20) bewirkt,
und **dass** die Überwachungsebene wenigstens einen Detektionsbereich (704, 804) umfasst, in dem durch die effektiven Strahlenbündel (22e) und die effektiven Kreuzstrahlenbündel (22-1e und 22-2e) im gesamten Detektionsbereich (704, 804) eine lückenlose Ausleuchtung besteht.

2. Lichtgitter nach einem der vorhergehenden Ansprüche, **dadurch gekennzeichnet, dass** die die Lichtsendeeinheiten (19) eine Sendelinse aufweisen, in deren Fokus eine ausgedehnte Lichtquelle (18) angeordnet ist.

3. Lichtgitter nach Anspruch 2, **dadurch gekennzeichnet, dass** die Lichtquelle von einer mit einem Lichtsendeelement (LED) beleuchteten Blende gebildet ist.

4. Lichtgitter nach einem der vorhergehenden Ansprüche, **dadurch gekennzeichnet, dass** die Sendeoptik derart ausgebildet ist, dass der Querschnitt des Sendelichts einer Lichtsendeeinheit in etwa rechteckförmig ist.

5. Lichtgitter nach einem der vorhergehenden Ansprüche, **dadurch gekennzeichnet, dass** die Lichtempfangseinheit eine Empfangsoptik mit einer Empfangslinse aufweist.

6. Lichtgitter nach einem der vorhergehenden Ansprüche, **dadurch gekennzeichnet, dass** das Licht einer Lichtsendeeinheit neben der gegenüberliegenden Lichtempfangseinheit und der nächst benachbarten Lichtempfangseinheit auch die übernächste Nachbarempfangseinheit erfasst zur Bildung von Kreuzstrahlenbündel zweiter Ordnung.

7. Lichtgitter nach einem der vorhergehenden Ansprüche, **dadurch gekennzeichnet, dass** Kreuzungsbereiche der Strahlenbündel verschiedener Ordnungen den Detektionsbereich bilden.

8. Verwendung eines Lichtgitters nach einem der vorhergehenden Ansprüche zur Ermittlung der Höhe und/oder Position von durch die Überwachungsebene geförderten Objekten.
